# EUROPEAN PATENT APPLICATION

(11) **EP 2 340 706 A1**
(43) Date of publication of application: **06.07.2011**
(21) Application number: 10196860.0
(22) Date of filing: 23.12.2010
(51) Int. Cl.: A01G 9/14, E06B 3/67

(54) **A coated translucent substrate for a greenhouse and a freezer door**

(30) Priority: 29.12.2009 NL 2004024
(71) Applicant: Omt Solutions Beheer B.v., 5751 XH Deurne (NL); GroGlass SIA, 1073 Riga (LV)
(72) Inventor: Van Nijnatten, Petrus Antonius, 5751 XH, Deurne (NL)
(74) Representative: DeltaPatents B.V.

(57) **Abstract**

A coated translucent substrate (100) that comprises a translucent substrate (108), an anti-reflection coating (102) and a conductive oxide coating (102). The translucent substrate (108) has a first surface (106) at a first side. The anti-reflection coating (102) is provided at the first side of the translucent substrate (108) to reduce the reflection of light by the coated translucent substrate (100) and the anti-reflection coating (102) is applied to the conductive oxide coating (104). The conductive oxide coating (104) is arranged between the first surface (106) of the translucent substrate (108) and the anti-reflection coating (102) to reduce the transmission of light in the near infrared spectrum through the coated translucent substrate (100). The conductive oxide coating (104) comprises SnO₂:F. The coated translucent substrate (100) transmits relatively good light in the Photosynthetically Active Radiation spectral range and blocks the light in the near infrared spectral range relatively good as well.

## Description

### Field of the invention

The invention relates to the field of translucent panes for greenhouses and also relates to freezer doors.

### Background of the invention

Glass with a coating to block the transmission of a part of the light in the Near InfraRed (NIR) spectrum (roughly from 800 to 2500 nanometers) is used in some greenhouses to prevent the transfer of the NIR light into the greenhouse. NIR light is not required for photosynthesis of the plants in the greenhouse and substantially only result in increasing the temperature of the greenhouse. Plants have a temperature bandwidth in which their growth is optimal. If the temperature in the greenhouse exceeds the maximum temperature of the bandwidth, the temperature is reduced. The simplest way to reduce the temperature in the greenhouse is ventilating the greenhouse. However, this is not prefered because of the loss of carbon dioxide. Relative high concentrations of carbon dioxide also positively stimulate crops growth, which is lost by ventilation.

Known coatings that block the light in the NIR spectral range are, for example, a silver (Ag) based low-emissivity coatings, or transparent conductive oxide coatings of, for example, ZnO₂:Al or an Indium Tin Oxide (ITO). The conductive oxide coatings are often used as transparent electrodes because of their conductivity. Silver based coatings are soft and have, for example, a disadvantage of oxidation when the coating is in contact with oxygen and with water in the air. Thus, a single glass pane with silver is not possible. Furthermore, the material is relatively expensive. A silver based coating is often used in double glazing for buildings. The silver based coating is provided on one of the surfaces of one of the glass panes in an argon gas filled air gap between the glass panes to prevent that the silver layer is exposed to the ambient and degrades. However, the construction of greenhouses is in general not designed for the weight of double glazing and double glazing is more expensive. A disadvantage of all the mentioned materials is that they block a part of the light in the Photosynthetically Active Radiation (PAR) spectral range (roughly from 400 to 700 nanometers) which is required for the photosynthesis of the crops. Thus, a problem of the know glass panes with a silver based low-emissivity coating or with a transparent conductive oxide coating is that they reduce the yield of greenhouse.

### Summary of the invention

It is an object of the invention to provide a translucent pane that has an improved blocking of light in the Near Infrared light spectrum while maintaining relatively good transmission of light in the Photosynthetically Active Radiation spectral range and thus resulting in a good yield of the greenhouse.

A first aspect of the invention provides a coated translucent substrate as claimed in claim 1. A second aspect of the invention provides a greenhouse as claimed in claim 13. A third aspect of the invention provides a freezer as claimed in claim 15. Advantageous embodiments are defined in the dependent claims.

A coated translucent substrate in accordance with the first aspect of the invention comprises a translucent substrate, an anti-reflection coating and a conductive oxide coating. The translucent substrate has a first surface at a first side. The anti-reflection coating is provided at the first side of the translucent substrate to reduce the reflection of light by the coated translucent substrate and the anti-reflection coating is applied to the conductive oxide coating. Further, the anti-reflection coating comprises multiple layers. The conductive oxide coating is arranged between the first surface of the translucent substrate and the anti-reflection coating to reduce the transmission of light in the near infrared spectrum through the coated translucent substrate. The conductive oxide coating comprises SnO₂:F.

The translucent substrate may, for example, be made of glass. Furthermore, the translucent substrate may be diffuse, patterned or fully transparent. Both the anti-reflection coating and the conductive oxide coating are applied to the translucent substrate at the first side and the conductive oxide coating is closest to the translucent substrate, however, one or more other layers or coating may be interposed between the conductive oxide coating and the translucent substrate. The anti-reflection coating is directly applied to the conductive oxide coating. The conductive oxide coating and the anti-reflection coating are applied substantially parallel to the first surface and may, for example, substantially cover the whole first side of the translucent substrate. The conductive oxide coating reduces the transmission of light in the near infrared spectral range, which means that a substantial part of the light in the near infrared spectral range is reflected and/or absorbed by the conductive oxide coating.

The conductive oxide coating that comprises SnO₂:F reflects and absorbs a substantial part of the light in the near infrared spectral range. Further, the conductive oxide coating comprising SnO₂:F provides on a translucent substrate an additional effect of a good thermal insulation because it has a thermal emissivity which is lower than the thermal emissivity of the translucent substrate without the coating. However, like most known conductive oxide coatings, a part of the light in the Photosynthetically Active Radiation (PAR) spectral range is also reflected, which significantly reduces the yield of the greenhouse. The inventor found that adding the anti-reflection coating on the SnO₂:F not only significantly reduces reflection of the light in the PAR spectrum, but also, surprisingly, increases the reflection of light in the near infrared spectral range. At the same time the anti-reflection coating has a negligible effect on the relative low thermal emissivity of the conductive oxide. Having a relative low thermal emissivity means that only a relative small amount of heat is lost via the radiation of heat in the infrared spectrum. As a result, the coated translucent substrate provides relatively high transmission of light in the PAR spectra range, while efficiently blocking NIR and lowering heat transfer via radiation. As such the yield of the greenhouse is improved significantly.

The inventor wants to point out that specific glass types with an anti-reflection coating and other types of glass with a conductive oxide coating are available on the market for some decades. Some variants of these types of glass have been applied to greenhouses. Glass with the conductive oxide coating has been used as glazing in greenhouses for its thermal insulating properties because it has a lower thermal emissivity compared to uncoated glass. However, the market lost interest because of a significant lower transmission in the PAR spectral range compared to uncoated glass resulting in a much lower production yield. However, a coated translucent substrate with the combination of a conductive oxide coating comprising SnO₂:F and an anti-reflection coating on a layer comprising SnO₂:F was not manufactured and has not been used as glass for greenhouses. Apparently, there were no expectations with respect to an additional positive benefit of the combination and as such there was no incentive to combine both types of coatings.

In a further embodiment, the anti-reflection coating is optimized for maximum transmittance of light in a predefined range of light comprising light in a Photosynthetically Active Radiation (PAR) spectral range. The optimized anti-reflection coating comprises multiple layers. The thickness of the multiple layers may be chosen such that reflection of the light in a predefined range of light is reduced as much as possible. By means of simulation or experimentation an optimum may be found which is substantially close to a theoretical maximum. Especially, if a part of the PAR spectral range overlaps with the predefined range of light, a large amount of light which is required by the crops for photosynthesis is transmitted into the greenhouse.

In a further embodiment, the materials of the one or more layers of the anti-reflection coating is optimized for obtaining a maximum transmission of light in the predefined range of light and/or at the one or more predefined angles of incidence.

In another embodiment, the anti-reflection coating optimized for maximum transmittance of light in a predefined range of light comprising light in a Photosynthetically Active Radiation (PAR) spectral range by taking into account the refractive index and the thickness of the conductive oxide coating. The anti-reflection coating and the conductive oxide coating may both comprise one or more layers. The combination of all these layers may be optimized, which is advantageous because some characteristics of the layers of the conductive oxide coating interact with characteristics of the layers of the anti-reflection coating. Features of the layers that may be optimized are the materials and the thickness of the layers. The optimization may be performed for one or more predefined angles of incidence of the light, for example for an angle of incidence of 60 degrees, or for diffuse light which combines all angles of incidence. If the anti-reflection coating is optimized with respected to the conductive oxide coating, as much as possible light in the PAR spectral range is transmitted into the greenhouse which results in a good yield.

In another embodiment, the combination of the anti-reflection coating and the conductive oxide coating is optimized for maximum transmittance of light in a predefined range of light comprising light in a Photosynthetically Active Radiation (PAR) spectral range.

In a further embodiment, the optimization is performed with respect to one or more predefined angles of incidence of the light in the predefined range of light. This optimization may be performed such that the transmission of light in the predefined range of light is optimal for greenhouse. For example, the optimization may for example be executed for an angle of incidence of 60 degrees, or for all angle of incidence, which represent for example diffuse light

On cloudy days diffuse light impinges on the greenhouse. Diffuse light provides light that impinges at all angles of incidence. The inventor has found that the characteristics of translucent substrates measured at an angle of incidence of 60 degrees provides a relative good indication regarding the characteristics of the translucent substrates when used in diffuse light conditions at a greenhouse. Further, the angle of incidence of direct sunlight changes during the day. In regions with a lot of greenhouse, for example, in the Netherlands which is located at a north latitude of about 52 degrees, the average angle of incidence of direct sunlight is between 40 and 70 degrees angle of incidence throughout the year depending on the orientation of the greenhouse and the angle of the roof. The inventor measured the transmission characteristics of the coated translucent substrate at an angle of incidence of 60 degrees. The transmission characteristic in the PAR spectral range shows at this angle of incidence a high improvement and the transmission of light in the NIR spectral range decreases much more than expected. Thus, the coated translucent substrate according to the embodiment provides for use in at least a greenhouse unexpected good characteristics.

In an embodiment, the coated translucent substrate comprises at a second surface of the translucent substrate another anti-reflection coating for reducing the reflection of light by the coated translucent substrate. The second surface of the translucent substrate is substantially opposite the first surface. Every transition from a first material to a second material both having different reflective indexes results in reflections of a part of the light. Thus, the interface between the translucent substrate and the ambient may reflect a part of the light in the PAR spectral range as well. Therefore, it is advantageous to provide another anti-reflection coating at the second side of the translucent substrate.

In a further embodiment, the anti-reflection coating is composed of a first stack of at least three layers and/or another anti-reflection coating that is composes of a second stack of at least three layers. The stacks of at least three layers provide good anti-reflection characteristics such that the transmission of light in the PAR spectral range is high. Typically, many commercially used anti-reflection coatings comprise four layers. In an embodiment, the first stack of layers and/or the second stack of layers is composed of at least four layers. Four layers provide better anti-reflections characteristics and as such a better transmission of light in the PAR spectral range.

In an embodiment, the translucent substrate is a glass substrate and the conductive oxide coating is manufactured with an Atmospheric Pressure Chemical Vapour Deposition process. This process may efficiently be executed immediately after manufacturing the translucent substrate when the translucent substrate is cooling down. The manufactured translucent substrate coated with the conductive oxide coating is cost effective. Further, the conductive oxide coating is well resistant against mechanical and chemical influences. This is advantageous for applying the conductive oxide coating on a single translucent pane and using the translucent substrate outdoors.

In a further embodiment, the translucent substrate is a glass substrate and the first stack of layers and/or the second stack of layers is manufactured by a process which differs from the Atmospheric Pressure Chemical Vapour Deposition process. The anti-reflection coating which comprises at least 3 or 4 layers is typically manufactured with a sputter deposition process, for example, with microware sputtering. The sputter deposition process is a well-known, robust and an efficient process to create the first stack of layers and/or the second stack of layers. Furthermore it allows the first side and the second side of the translucent substrate to be coated with the same process with a high accuracy and in which even the thickness of the layers of the first stack and the second stack may differ.

In an embodiment, the translucent substrate is a glass substrate and the conductive oxide coating is manufactured with an Atmospheric Pressure Chemical Vapour Deposition process and the first stack of layers and/or the second stack of layers is manufactured by a process which differs from the Atmospheric Pressure Chemical Vapour Deposition process.

The manufacturing of the conductive oxide coating with the Atmospheric Pressure Chemical Vapour Deposition process is in general executed in a first factory where the translucent substrate is manufactured and is applied to the translucent substrate when the translucent substrate is cooling down. The anti-reflection coating is typically manufactured with a microwave sputter deposition process, which is a complete different process requiring complete different equipment and is typically executed in a second factory other than the first factory in which the conductive oxide coating is manufactured on the translucent substrate. The fact that two completely different processes that are executed in different factories are required to manufacture the coated translucent substrate is a reason why the two coatings have not been combined in the past.

A semi-manufactured product of a translucent substrate comprising the conductive oxide coating is coated with the anti-reflection coating via the sputter deposition process. As discussed above, the Atmospheric Pressure Chemical Vapour Deposition process in a first factory results in a cost effective semi-finished product, and the application of the first stack of layers and/or the second stack of layers in the second factory via an efficient process provided a cost effective coated translucent substrate. The yield improvement may even be such that it only takes several years to earn back the extra costs of the layers of the coatings.

Due to the different manufacturing techniques, which are currently executed in different factories, the combination has not been done before However, the inventor has found out that applying an anti-reflection coating manufactured with a sputter deposition process on top of the semi-manufactured product results in the coated translucent substrate with the discussed unique characteristics.

In an embodiment, the first stack of layers and/or the second stack of layers comprises a first layer of TiO₂ which is sandwiched between a first layer of SiO₂ and a second layer of SiO₂. The layers of TiO₂ and SiO₂ may be manufactured accurately and efficiently. The material of the layers have the right characteristics, like their refractive indices, to create an anti-reflection coating on glass. The right combination of successive layers having specific refractive indices and manufactured at a specific thickness results in an anti-reflection coating that reduces the reflection of light as much as possible. It is to be noted that TiO₂ is not the only material which may be used in the anti-reflection coating for the layers which have a high reflective index. Other materials that may be used are: Nb₂O₃, Ta₂O₅, HfO or Si₂N₄.

In a further embodiment, the first stack of layers and/or the second stack of layers comprises a second layer of TiO₂, wherein the first layer of SiO₂ is sandwiched between the first layer of TiO₂ and the second layer of TiO₂ resulting in a four layer anti-reflection coating. Thus, the layers of the stack of layers comprise layers of TiO₂ that alternate with layers of SiO₂. In an embodiment of the coated translucent substrate, the second layer of TiO₂ of the first stack is applied onto a surface of the conductive oxide coating. In an embodiment of the coated translucent substrate, the second layer of TiO₂ of the second stack is applied onto the second surface of the translucent substrate.

In an embodiment, the first side of the translucent substrate is a light input window of the coated translucent substrate. Thus, the first side is the side of the coated translucent substrate from which the light impinges on the coated translucent substrate. The thermal resistance of, for example, a glass pane depends on the conduction of heat by the glass pane, and the conduction, convection and radiation of heat from the glass surfaces to air at the surfaces of the glass pane. The atmospheric conditions in a greenhouse are typically more humid than the atmospheric conditions of the environment of the greenhouse and as such are the conduction, convection and radiation of heat different on both sides of the glass panes of the greenhouse. Having the conductive oxide coating at the side at which the light impinges on the coated translucent substrate, which is in the greenhouse the exterior of the greenhouse, is especially advantageous with respect to the insulation characteristics of the coated translucent substrate.

In a further embodiment, the coated translucent substrate comprises an indicator for indicating the first side of the translucent substrate as the light input window of the coated translucent substrate. The coatings are nearly invisible and as such it is difficult for greenhouse construction workers to distinguish the first side from the second side. As discussed above it is advantageous to orient the first side of the translucent substrate towards the ambient of the greenhouse. The indicator assists the greenhouse construction workers to position the coated translucent substrate correctly in the frame of the greenhouse. In another embodiment the indicator is not provided at the first side, but at a second side which is substantially opposite to the first side. The indicator is for indicating the light output window.

In another embodiment, the coated translucent substrate comprises a further translucent substrate separated from the translucent substrate by a gas filled air gap. The coated translucent substrate of this embodiment results in a double glazing configuration which has a much better insulation characteristic than a configuration with only a single translucent substrate. In an embodiment, the first side of the translucent substrate is facing the air gap and the translucent substrate is the light input window for first receiving the impinging light. If the conductive oxide coating is positioned in the gas filled air gap and the translucent substrate on which the conductive oxide coating is provided faces toward the impinging light, the insulation characteristic of the coated translucent substrate is better. Especially, the thermal resistance of the air gap increases significantly if the conductive oxide coating is facing the air gap. Use of the coated translucent substrates according to this embodiment in a greenhouse prevents as much as possible the loss of heat, during the winter, by the greenhouse. The coated translucent substrate blocks a substantial part of the light in the NIR spectral range and thereby prevents, especially in the summer, the heating up of the greenhouse by the NIR light in the sunlight. The coated translucent substrate provides a relatively good insulation, especially in the winter, when the greenhouse is heated by means of, for example, fossil fuels. In a further embodiment, the translucent substrate is the light input window and may comprise an indicator for indicating which side of the coated translucent substrate has to be oriented towards the impinging light.

In an embodiment, the further translucent substrate comprises a third surface and a fourth surface. The third surface is facing the air gap and the fourth surface is substantially opposite the third surface. A further anti-reflection coating is applied to the third surface and/or the fourth surface for reducing the reflection of light by the third surface and/or the fourth surface. The further anti-reflection coating prevents the reflection of light, by the further translucent substrate. In a further embodiment, the further anti-reflection coating is optimized for maximally transmitting light in a further predefined range of light comprising light in a Photosynthtically Active Radiation (PAR) spectral range. The optimized further anti-reflection coating better prevents the reflection of light in the PAR spectral range. As discussed in other embodiments, the features of the layers that may be optimized are the materials and the thickness of the layers. The optimization may be performed for one or more predefined angles of incidence of the light, for example for an angle of incidence of 60 degrees, or for diffuse light which combines all angles of incidence.

According to a second aspect of the invention, a greenhouse is provided which comprises one or more coated translucent substrates according to the first aspect of the invention. The greenhouse which is provided with the coated translucent substrates provides a higher yield. The coated translucent substrates substantially block the light in the NIR spectrum, which does prevent too much heating of the greenhouse by sunlight, and substantially transmits light in the PAR spectral range into the greenhouse, which contributes to the growth of the crops in the greenhouse. The preventing of too much heating of the greenhouse results in the prevention of unnecessary ventilation and as such in the prevention of unnecessary lost of carbon dioxide which is used by the crops to grow. Thus, the production yield of the greenhouse is higher than the production yield of greenhouses with normal glass panes. Further, some crops, for example peppers (capsicums), are very sensitive for the NIR light in direct sunlight because if the NIR light is provided in too large quantities, the light may burn in the crops. Blocking a substantial part of the NIR light prevents the burning-in of the crops.

In an embodiment, the greenhouse comprises a roof and at least one wall. The roof comprises one or more coated translucent substrates which comprise one or more coated translucent substrates comprising a single translucent substrate. The wall comprises at least one or more coated translucent substrates comprising two translucent substrates separated by an air gap. The wall with one or more coated translucent substrates provides a better insulation, good PAR light transmission characteristics and a substantially good blocking of light in the NIR spectral range. Only minor structural changes are required in the walls to persist the higher weight of double glazing because the walls are supported by the ground. The roof provides advantageous PAR light transmission characteristics and a substantially good blocking of NIR light, without the requirement to change the roof supporting structure to persist the higher weight of double glazing.

According to a third aspect of the invention, a freezer is provided that comprises a door with a substantially transparent window. The substantially transparent window comprises the coated translucent substrate according to the first aspect of the invention. The freezer may, for example, be used in shops to present frozen product to potential customers. The coated translucent substrate substantially transmits all light in the spectral range which is visible for persons. The colors which may be seen by the human eye substantially overlaps with the PAR spectral range. Further, the coated translucent substrate substantially blocks the near infrared light such that the interior of the freezer does not unnecessary heat up with near infrared light.

In an embodiment, a refrigerator comprises a door with a substantially transparent window. The substantially transparent window comprises the coated translucent substrate according to the first aspect of the invention.

These and other aspects of the invention are apparent from and will be elucidated with reference to the embodiments described hereinafter.

It will be appreciated by those skilled in the art that two or more of the above-mentioned embodiments, implementations, and/or aspects of the invention may be combined in any way deemed useful.

Modifications and variations to the coated translucent substrate, which correspond to the described modifications and variations of the coated translucent substrate, can be carried out by a person skilled in the art on the basis of the present description.

### Brief description of the drawings

In the drawings:
Fig. 1 schematically shows a cross-cut of an embodiment of a coated translucent substrate according to the first aspect of the invention,
Fig. 2 schematically shows a cross-cut of another embodiment of a coated translucent substrate,
Fig. 3a shows a chart with the transmission characteristics of light when measured with light impinging at zero degrees angle of incidence,
Fig. 3b shows a chart with the transmission characteristics of light when measured with light impinging at 60 degrees angle of incidence,
Fig. 4 schematically shows a cross-cut of double glazing comprising a coated glass substrate according to the first aspect of the invention,
Fig. 5 schematically shows a cross-cut of a greenhouse according to the second aspect of the invention, and
Fig. 6 schematically shows a freezer according to the third aspect of the invention.

It should be noted that items denoted by the same reference numerals in different Figures have the same structural features and the same functions, or are the same signals. Where the function and/or structure of such an item have been explained, there is no necessity for repeated explanation thereof in the detailed description.

### Detailed description

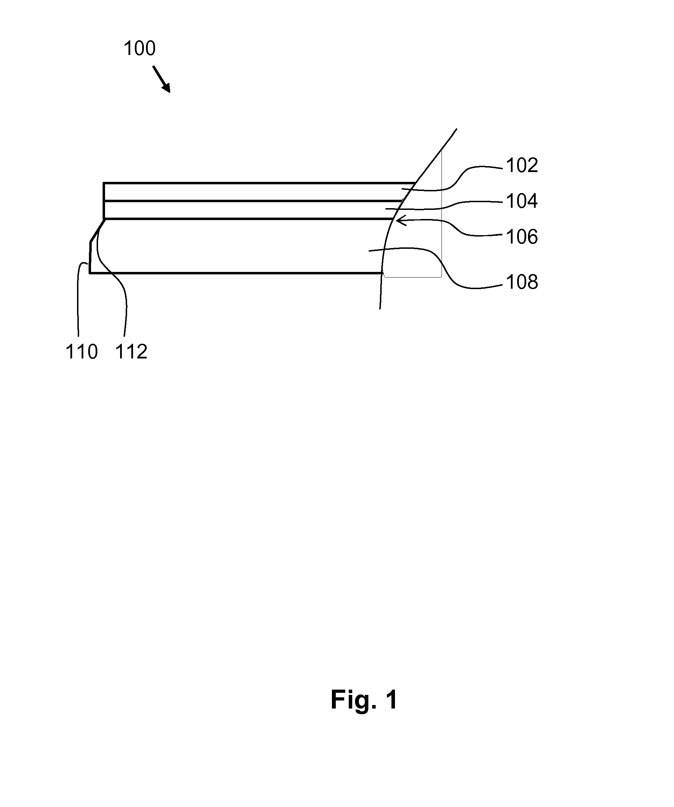

A first embodiment is shown in Fig. 1. A cross-cut of a part of a coated translucent substrate 100 is shown. The coated translucent substrate 100 comprises a translucent substrate 108 which has a first surface 106. On the first surface 106 is applied a conductive oxide coating 104 on which is provided a multilayer anti-reflection coating 102. As shown, at at least one of end faces 110 of the translucent substrate 100 is beveled resulting in a beveled portion 112 of the end face 110.

The translucent substrate 100 may, for example, be made of glass. Furthermore, the translucent substrate 100 may be diffuse or fully transparent.

The conductive oxide coating 104 blocks at least a part of the light in the Near InfraRed (NIR) spectrum and the anti-reflection coating 102 reduces the reflection of light, especially light in the Photosynthetically Active Radiation (PAR) spectral range. The coated translucent substrate 100 has good transmission characteristics of light in the PAR spectrum and blocks a large amount of light in the NIR spectral range. Therefore, the coated translucent substrate 100 is a very effective solution for the windows of a greenhouse to increate the yield of the greenhouse: the crops receive a lot of light in the PAR spectrum and the greenhouse does not receive too much light in the NIR spectral range and as such the greenhouse does not heat up too much. Unnecessary ventilation as well as unnecessary loss of carbon dioxide is prevented.

The beveled portion 112 of the end face 110 provides the users of the coated translucent substrate 100 an indictor to indicate the first surface 106 of the translucent substrate 108. It is it is advantageous, especially in greenhouses, to position the first surface 106 towards the sun because the coated translucent substrate 100 provides better insulation characteristics in such a configuration. Thus, light impinging the coated translucent substrate 110 only enters the translucent substrate after passing through the anti-reflection coating 102 and passing through the conductive oxide coating 104.

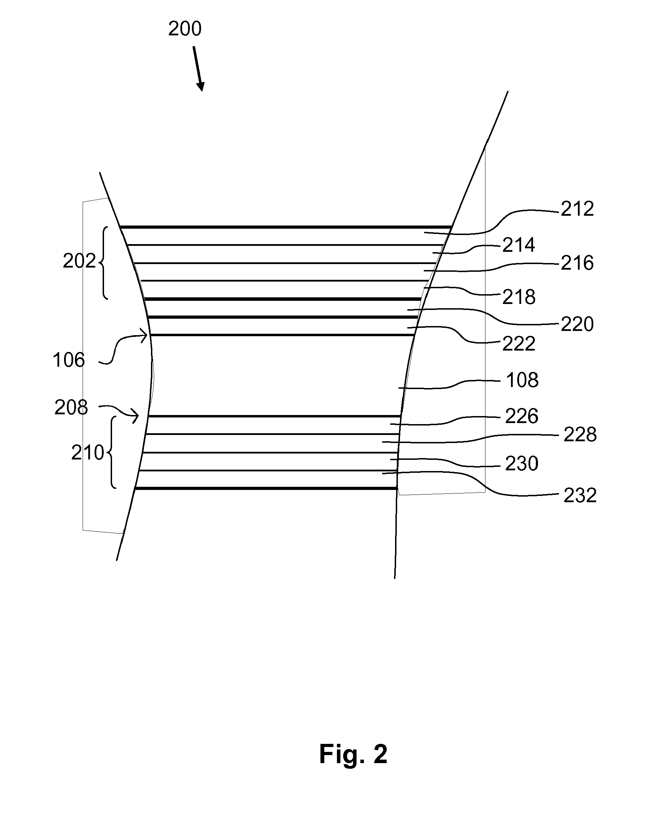

Fig. 2 schematically shows a cross-cut of a part of another embodiment of the first aspect of the invention. A coated translucent substrate 200 is shown which is manufactured on basis of a translucent substrate 108. The translucent substrate 108 has a first surface 106 and a second surface 208 which is substantially opposite the first surface 106. A first stack 202 of layers 212, 214, 216, 218 is an anti-reflection coating. A second stack 210 of layers 226, 228, 230, 232 is another anti-reflection coating. A base layer 222 is applied directly on the first surface 106 and in between the first stack 202 and the base layer 222 is interposed an conductive oxide coating 220.

The first stack 202 and the second stack 210 comprise layers 214, 218, 226, 230 of TiO₂ and layers 212, 216, 228, 232 of SiO₂. The base layer 222 is a layer of porous SnO₂. The conductive oxide coating is a layer of SnO₂:F.

All interfaces between the air and the coated translucent substrate 200 are provided with the anti-reflection coatings. This prevents the reflection of light. The conductive oxide coating 220 blocks a substantial part of the light in the NIR spectral range. The thickness of the layers 212, 214, 216, 218 of the first stack 202 is optimized for maximally reducing the reflection of light in the PAR spectral range. The optimization of the layer 212, 214, 216, 218 of the first stack 202 is performed for diffuse light and the characteristics of the conductive oxide coating 220 are taken into account in the optimization. The thickness of the layers 226, 228, 230, 232 of the second stack 210 is optimized for maximally reducing the reflection of light in the PAR spectral range by the second surface 208 of the translucent substrate 108. The thicknesses of the layers 212, 214, 216, 218 of the first stack 202 differ from the thicknesses of the layers 226, 228, 230, 232 of the second stack 210 because the optimization of the first stack 202 takes into account the characteristics of the conductive oxide coating 220 on which the first stack 202 is applied.

In table 1, which is presented below, the materials of all the layers shown in Fig 2 are listed.

**Table 1: materials of the layers of the translucent substrate 100**

| *Layer* | *Material* |
|---|---|
| 212 | SiO₂ |
| 214 | TiO₂ |
| 216 | SiO₂ |
| 218 | TiO₂ |
| 220 | SnO₂:F |
| 222 | SnO₂ |
| 108 | *glass* |
| 226 | TiO₂ |
| 228 | SiO₂ |
| 230 | TiO₂ |
| 232 | SiO₂ |

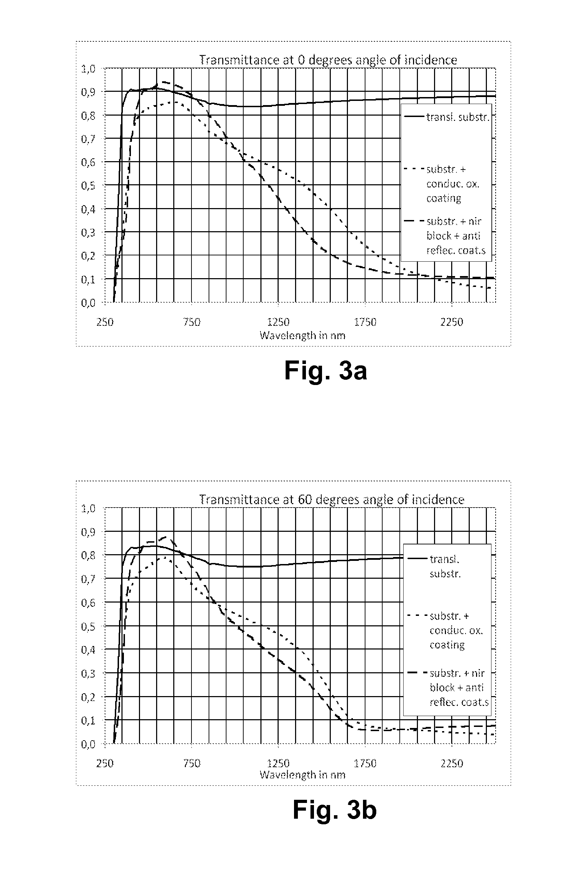

In Fig. 3a and Fig. 3b is shown that the coated translucent substrate 200 has advantageous transmission characteristics. In Fig. 3a and in Fig. 3b measurements of the transmission of light through the coated translucent substrate 200 are shown. Fig. 3a shows the measurements in which the light impinges on the coated translucent substrate at zero degrees angle of incidence. Fig. 3b shows the light transmission characteristics of light that impinges on the coated translucent substrate at 60 degrees angle of incidence.

The continuous line shows the transmission characteristic of clear glass. Today, most of the greenhouses still use clear uncoated glass. The dotted line shows the transmission characteristics of glass with only the base layer of porous SnO₂ and the conductive oxide coating of SnO₂:F The dashed line represents the transmission characteristics of the coated translucent substrate as discussed with respect to Fig. 2. On the y-axis the normalized transmission is drawn. The Photosynthetically Active Radiation (PAR) spectral range is roughly from 400 to 700 nanometers. The near infrared (NIR) spectral range is roughly from 800 to 2500 nm.

As may be seen in Fig. 3a and 3b, the coated translucent substrate 200 is significantly better with respect to the transmission of light in the PAR spectral range, and significantly better with respect to the blocking of light in the NIR spectral range. It is to be noted that the characteristics are not only better when compared to glass with the conductive oxide coating, but also better than clear glass. Thus, if a greenhouse is constructed with the coated translucent substrate 200 instead of clear glass, the transmission of light in the PAR spectral range into the greenhouse will be better and most of the light in the NIR spectral range will be blocked.

The transmission of light in the PAR spectral range of the coated translucent substrate 200 is substantial better than the transmission of light in the PAR spectral range by glass with only the base layer and the conductive oxide coating. Thus, in the PAR spectral range the anti reflection coatings provide an improvement of the transmission and as such a reduction of the reflection and absorption. The transmission of light in the NIR spectral range is much lower for the coated translucent substrate 200 than the transmission of light in the NIR spectral range for glass with only the base layer and the conductive oxide coating. Thus, the anti reflection coatings increased the reflection and absorption of light in the NIR spectral range.

The effect of better PAR light transmission and more NIR light blocking for light impinging at 60 degrees is advantageous for greenhouses. As discussed before, the 60 degrees angle of incidence well represents the characteristics of diffuse light impinging the coated translucent substrate, and the average angle of incidence of direct sunlight is close to 60 degrees angle of incidence.

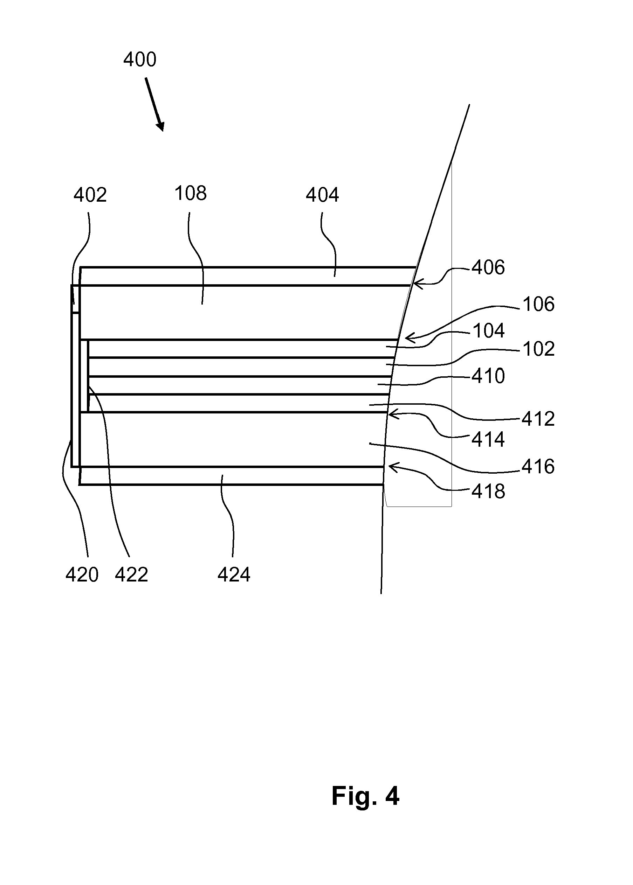

Fig.4 schematically shows another embodiment of the invention. A cross-cut of a part of a double glazing pane 400 is shown. At the left end of Fig. 4 the end face of the double glazing pane is shown. At the right end of Fig. 4 the cross-cut is cut-off, but the double glazing pane 400 continues further. The double glazing pane 400 comprises a first translucent substrate 108 and a second translucent substrate 416. The first translucent substrate 108 and the second translucent substrate 416 are separated by an air gap 410 which is filled with a gas, for example argon. At the circumference of the double glazing pane 400 a spacer 422 is provided to separate the first translucent substrate 108 from the second translucent substrate 416. Further, at the circumference is provided a seal 420, for example, made of silicon, for sealing the end faces of the double glazing pane 400 and to keep the air gap 410 air tight.

The first translucent substrate 108 has a first surface 106 which is facing the air gap 410. A conductive oxide coating 104 is provided on top of the first surface 106 whereon which an anti-reflection coating 102 is applied. The anti-reflection coating is optimized for transmitting light in the PAR spectral range and is optimized with respect to the characteristics of the conductive oxide coating 104. The first translucent substrate 108 has a second surface 406 which is substantially opposite the first surface 106. On the second surface 406 is applied another anti-reflection coating 404. The another anti-reflection coating is optimized for transmission of light in the PAR spectral range.

The second translucent substrate 412 has a third surface 414 which is facing the air gap 410 and has a fourth surface 418 which is substantially opposite the third surface 414. The third surface 414 and the fourth surface 418 are coated with the another anti-reflection coating 412 and 418 as well. These anti-reflection coating 412, 418 have the same characteristics of as the another anti-reflection coating 404.

In the embodiment of Fig. 4 the air gap 410 is air tightly sealed, however, in the embodiment of the double glazing pane 400 it is not necessary to seal the air gap 410 air tight. The conductive oxide coating 104 and the anti-reflection coatings 102, 412 do not react with air or fluids in the air and as such the air gap 410 may be filled with air and air may flow in or flow out the air gap 410. However, the amount of air that flows in and out the air gap 410 has to be limited in order to keep the thermal insulation characteristic of the double glazing pane 400 high enough.

The double glazing pane 400 provides a good light transmission. The anti-reflection coatings 102, 404, 412, 424 prevent the reflection of light, especially in the PAR spectral range. The conductive oxide coating 104 blocks a substantial part of the light in the NIR spectral range and the effect of blocking light in the NIR spectral range is amplified by the anti-reflection coating 102. Thus, the combined effect of the anti-reflection coatings 102, 404, 412, 424 and the conductive oxide coating 104 is that light in the PAR spectral range is well transferred through the double glazing pane 400 and a significant amount of light in the NIR spectral range is blocked. Further, the double glazing pane 400 is a good insulator. The air gap functions as an insulator and not much heat may transfer from the second surface 406 towards the fourth surface 418, and vice versa.

A part 402 of the seal 420 has another color. The part 402 of seal 420 is closest to the first translucent substrate 108. Thus, the part 402 of another color indicates which translucent substrate of the double glazing pane 400 comprises the conductive oxide coating 104 and as such the users of the double glazing pane 400 learn from the part 402 of the another color how the glazing pane has to be positioned in a window frame. Especially, when used in greenhouses, it is advantageous to position the double glazing such that (sun) light impinging the greenhouse first passes the first translucent substrate 108 with the conductive oxide coating 104 before the light is transferred towards the second translucent substrate 416. A part of the near infrared light may be absorbed by the conductive oxide coating 104. The absorption of the part of the near infrared light results in heating up the conductive oxide coating 104. The air gap 410 prevents the conduction of this heat towards the second translucent substrate 412 and as such the heat does not enter the greenhouse.

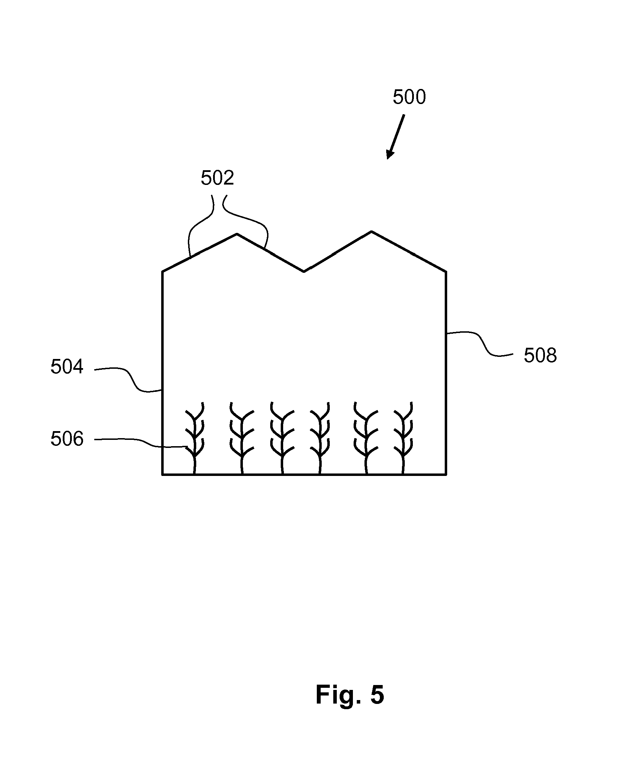

Fig. 5 schematically shows a cross-cut of a greenhouse 500. The greenhouse is used to grow crops 506 and the greenhouse is constructed of walls 504, 508 and has a roof 502. The walls 504, 508 and the roof 502 are constructed of a frame and glass panes and the frame supports glass panes. In order to allow as much as possible light entering the greenhouse, most surfaces of the walls 504, 508 and the roof 502 consist of the glass panes and the frame is constructed such that it does not block much of the light that impinges on the greenhouse.

In an embodiment the glass panes of the walls 504, 508 and the roof 502 are single panes of a coated translucent substrates. The coatings on the translucent substrates are on a first side of the coated translucent substrate, seen in an order starting from the translucent substrate, a conductive oxide coating and an anti-reflection coating. In another embodiment, the coated translucent substrate further comprises on a second side of the coated translucent substrate another anti-reflection coating. The second side is substantially opposite the first side. Using the single panes is advantageous because it allows a relatively light-weight frame for the greenhouse because of the relative low weight of the single glass panes.

In another embodiment the glass panes of the walls 504, 508 are double panes of two coated translucent substrate which are separated by an air gap. One of the two coated translucent substrates comprises on a first surface a conductive oxide coating and an anti-reflection coating. Another anti-reflection coating may be provided on a second surface of the one of the two coated translucent substrates. The other one of the two coated translucent substrates may comprises on a third surface and a fourth surface the another anti-reflection coating as well. The roof 402 of the greenhouse 500 comprises single panes of a coated translucent substrate according to the first aspect of the invention. It is advantageous to use double panes in the walls because of the better insulation characteristics of the double panes. The costs of the greenhouse 500 do not increase dramatically by using double panes only in the walls 504 and 508, because it is relatively easy to construct the walls 504, 508 with a support structure that is able to persist the weight of the double panes.

In an embodiment, the roof 502 and the walls 504, 508 of the greenhouse comprise only the double panes as discussed above.

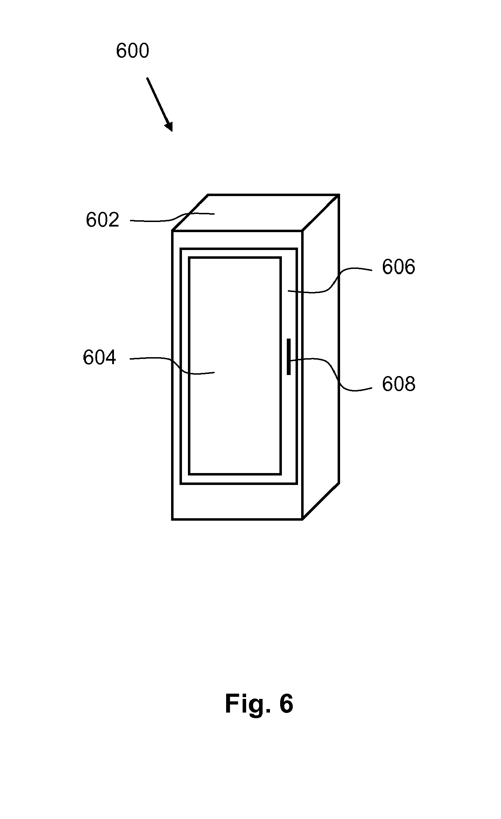

Fig. 6 shows a freezer 600 which is used for storing frozen product in a shop and presenting the frozen product to potential customers. The freezer 600 has a housing 602 which has a freezer door 606 in a front wall of the housing 602. The freezer door 606 may be opened by customer with handle 608.The freezer door 606 further comprises a substantially transparent window 604. The window 604 is manufactured of a coated translucent substrate according to the first aspect of the invention. The coated translucent substrate comprises at least a first translucent substrate on which at least a conductive oxide coating is manufactured whereon an anti-reflection coating is provided. The coated translucent substrate may further comprise a second translucent substrate which is separated from the first translucent substrate by an air gap.

The freezer is efficient and provides the customers a good view into the freezer. The combination of the conductive oxide coating and the anti-reflection coating reflect a substantial part of the light in the NIR spectral range, which would otherwise unnecessary heat up the interior of the freezer. Further, the freezer window 604 does transmit most of the light in the spectral range of light which is visible for people. And, if the freezer window 604 is manufactured of the first translucent substrate and the second translucent substrate, which are separated by an air gap, the freezer window has very good insulation characteristics.

It should be noted that the above-mentioned embodiments illustrate rather than limit the invention, and that those skilled in the art will be able to design many alternative embodiments without departing from the scope of the appended claims.

In the claims, any reference signs placed between parentheses shall not be construed as limiting the claim. Use of the verb "comprise" and its conjugations does not exclude the presence of elements or steps other than those stated in a claim. The article "a" or "an" preceding an element does not exclude the presence of a plurality of such elements. The mere fact that certain measures are recited in mutually different dependent claims does not indicate that a combination of these measures cannot be used to advantage.

## Claims

1. A coated translucent substrate (100, 200, 400) comprising:
- a translucent substrate (108) comprising a first surface (106) at a first side of the translucent substrate (108),
- an anti-reflection coating (102) at the first side of the translucent substrate (108) for reducing the reflection of light by the coated translucent substrate (100, 200, 400), and
- a conductive oxide coating (104, 220) arranged between the first surface (106) of the translucent substrate (108) and the anti-reflection coating (102) for reducing the transmission of light in the near infrared spectrum through the coated translucent substrate (100, 200, 400), wherein the conductive oxide coating (104, 220) comprises SnO₂:F, wherein the anti-reflection coating (102) is applied to the conductive oxide coating (104, 220) and wherein the anti-reflection coating (102) comprises multiple layers.

2. A coated translucent substrate (100, 200, 400) according to embodiment 1, wherein the anti-reflection coating (102) is optimized for a maximum transmittance of light in a predefined range of light comprising light in a Photosynthetically Active Radiation spectral range.

3. A coated translucent substrate (100, 200, 400) according to embodiment 1, wherein the anti-reflection coating (102) and the conductive oxide coating (104, 220) is optimized for a maximum transmittance of light in a predefined range of light comprising light in a Photosynthetically Active Radiation spectral range, wherein the optimization takes into account the refractive index and the thickness of the conductive oxide coating (104, 220).

4. A coated translucent substrate (100, 200, 400) according to embodiments 2 or 3, wherein the optimization is performed with respect to one or more predefined angles of incidence of the light in the predefined range of light.

5. A coated translucent substrate (100, 200, 400) according to one of the previous embodiments, wherein the coated translucent substrate (100, 200, 400) comprises at a second surface (208, 406) of the translucent substrate (108) another anti-reflection coating (404) for reducing the reflection of light by the coated translucent substrate (100, 200, 400), wherein the second surface (208, 406) is substantially opposite the first surface (106).

6. A coated translucent substrate (100, 200, 400) according to embodiment 5, wherein the anti-reflection coating is composed of a first stack (202) of at least three layers and/or the another anti-reflection coating (404) is composed of a second stack (210) of at least three layers.

7. A coated translucent substrate (100, 200, 400) according to embodiments 5 or 6, wherein the translucent substrate is a glass substrate, wherein the conductive oxide coating (104, 220) is manufactured with an Atmospheric Pressure Chemical Vapour Deposition process and/or wherein the first stack (202) of layers and/or the second stack (210) of layers is manufactured by a process which differs from the Atmospheric Pressure Chemical Vapour Deposition process.

8. A coated translucent substrate (100, 200, 400) according to embodiments 5, 6 or 7, wherein the first stack (202) of layers and/or the second stack (210) of layers comprises a first layer of TiO₂ (214, 230) sandwiched between a first layer of SiO₂ (216, 228) and a second layer of SiO₂ (212, 232).

9. A coated translucent substrate (100, 200, 400) according to embodiment 8, wherein the first stack (202) of layers and/or the second stack (210) of layers comprises a second layer of TiO₂ (218, 226), wherein the first layer of SiO₂ (216, 228) is sandwiched between the first layer of TiO₂ (214, 230) and the second layer of TiO₂ (218, 226) resulting in a four layer anti-reflection coating.

10. A coated translucent substrate (100, 200, 400) according to embodiment 9, wherein the coated translucent substrate (100, 200, 400) comprises an indicator (112, 402) for indicating the first side of the translucent substrate (108) as the light input window of the coated translucent substrate (100, 200, 400).

11. A coated translucent substrate (100, 200, 400) according to one of the previous embodiments comprising a further translucent substrate (416) separated from the translucent substrate (108) by a gas filled air gap (410).

12. A coated translucent substrate (100, 200, 400) according to embodiment 11, wherein the further translucent substrate (416) comprises a third surface (414) and a fourth surface (418), wherein the third surface (414) is facing the air gap (410) and the fourth surface (418) is substantially opposite the third surface (414), wherein a further anti-reflection coating (412, 424) is applied to the third surface (414) and/or the fourth surface (418) for reducing the reflection of light by the third surface (414) and/or the fourth surface (418).

13. A greenhouse (500) comprising one or more coated translucent substrates (100, 200, 400) according to embodiments 1 to 12.

14. A greenhouse (500) according to embodiment 13 comprising a roof (502) and at least one wall (504, 508), wherein the roof (502) comprises one or more coated translucent substrates (100, 200, 400) according to one of the embodiments 1 to 10, and wherein the wall (504, 508) comprises one or more coated translucent substrates (100, 200, 400) according to one of the embodiments 11 or 12.

15. A freezer (600) comprising a door (606) with a substantially transparent window (604), wherein the substantially transparent window (604) comprises the coated translucent substrate (100, 200, 400) according to one of the embodiments 1 to 12.
